# EUROPÄISCHE PATENTSCHRIFT

(11) **EP 1 258 647 B1**
(45) Veröffentlichungstag und Bekanntmachung des Hinweises auf die Patenterteilung: **15.02.2012**
(21) Anmeldenummer: 02007466.2
(22) Anmeldetag: 30.03.2002
(51) Int. Cl.: F16D 65/12, F16D 69/02, C23C 4/10

(54) **Bremsscheibe für ein Fahrzeug sowie Verfahren zu ihrer Herstellung**
Brake disc for a vehicle and method for its production
Disque de frein pour véhicule et son procédé de fabrication

(30) Priorität: 15.05.2001 DE 10123602; 30.05.2001 DE 10126228; 30.01.2002 DE 10203507
(43) Veröffentlichungstag der Anmeldung: 20.11.2002
(73) Patentinhaber: Volkswagen AG, 38436 Wolfsburg (DE)
(72) Erfinder: Lienkamp, Markus, 38108 Braunschweig (DE)
(74) Vertreter: Manske, Jörg

(56) Entgegenhaltungen:
- WO-A1-89/09889
- DE-A- 10 056 161
- DE-U- 29 617 774
- FR-A- 2 693 246
- US-A- 4 180 622
- US-A- 4 290 510
- US-A- 4 542 111

## Beschreibung

Die vorliegende Erfindung betrifft eine Bremsschelbe für ein Fahrzeug sowie ein Verfahren zu ihrer Herstellung umfassend einen Grundkörper aus einem metallischen Werkstoff, insbesondere Grauguss, welcher wenigstens eine Reibfläche mit einer Beschichtung aus einem Material mit einem hohen Reibwert aufweist.

Bremsscheiben für Fahrzeuge der vorgenannten Art sind grundsätzlich aus dem Stand der Technik bekannt. Beispielsweise beschreibt die DE 296 17 774 U1 eine Bremsscheibe mit einer Beschichtung aus Chromcarbid. Diese Beschichtung wird thermisch aufgebracht, zum Beispiel durch ein Flammspritzverfahren. Der Grundkörper der Bremsscheibe, der aus einem metallischen Werkstoff besteht, beispielsweise einer Leichtmetalllegierung oder Grauguss, wird bei der Aufbringung der Beschichtung nicht verändert. Carbide neigen zur Oxidation, so dass die thermische Stabilität beim Bremsen bei dieser Art von Beschichtung nicht gewährleistet ist.

Die DE 42 37 655 A1 beschreibt Bremsscheiben für Fahrzeuge mit einem inneren und einem äußeren Relbring, zwischen denen Kühlkanäle angeordnet sind. Die belden Reibringe können aus unterschiedlichen Materialien bestehen, beispielsweise kann einer der Reibringe aus einem Faserverbundwerkstoff oder einem keramischen Werkstoff bestehen und der andere Reibring aus Grauguss. Beide Reibringe werden mechanisch miteinander verbunden über Nieten oder dergleichen.

Die DE 295 11 652 U1 beschreibt Bremsscheiben für Fahrzeugbremsen aus einem metallischen Werkstoff, zum Beispiel Eisen oder Stahl, welcher eine Beschichtung aus TIN aufweist, um die Standzeit der Bremsscheibe zu erhöhen. Die Schrift enthält keine Ausführungen darüber, wie die Beschichtung aufgebracht wird.

Das Gebrauchsmuster G 92 08 983.6 beschreibt Bremsscheiben aus Leichtmetall mit ringförmigen Reibschichten aus teststoffhaltigen Nickel, wobei in das Nickelmaterial der Relbschichten Sillclumcarbide als Feststoffe eingelagert sind. Die Aufbringung der Reibschichten erfolgt hier galvanisch.

Die WO 89/09889 A1 offenbart eine Bremsscheibe der eingangs genannten Art, bei der der Grundkörper unter der Beschichtung eine abgetragene Materialstärke In Richtung achsparallel zur Achse der Bremsscheibe aufweist

Auf Grund unterschiedlicher thermischer Ausdehnungskoeffizienten des insbesondere aus Grauguss bestehenden Grundkörpers und des Beschichtungsmaterials kann es bei einer Erwärmung der aus dem Stand der Technik bekannten Bremsscheiben zu Rissen kommen, die durch thermische Spannungen induziert werden.
Ausgehend von dem zuvor genannten Stand der Technik besteht die Aufgabe der vorliegenden Erfindung darin, eine Bremsscheibe für ein Fahrzeug der eingangs genannten Gattung zu schaffen, bei der einerseits die Reibfläche auch bei hohen Temperaturen reibwertstabli ist und durch thermische Spannungen hervorgerufene Risse vermieden werden können und die andererseits kostengünstig herstellbar ist.

Die Lösung dieser Aufgabe liefert eine erfindungsgemäße Bremsscheibe der eingangs genannten Gattung mit den kennzeichnenden Merkmalen des Hauptanspruchs. Bei der Bremsscheibe gemäß der Erfindung verwendet man im Prinzip einen Grundkörper aus einem relativ kostengünstigen Material und trägt diesen ab, etwa um die Materialstärke, die der Schichtdicke der aufzubringenden Beschichtung entspricht und bringt dann die Beschichtung aus dem Material mit hohem Reibwert auf, welches als Reibfläche dient Erfindungsgemäß ist die Beschichtung des Grundkörpers als Gitterstruktur mit beschichteten Bereichen und unbeschichteten Bereichen ausgebildet. Dadurch kann die Entstehung von Rissen, die durch thermische Spannungen auf Grund unterschiedlicher thermischer Ausdehnungskoeffizienten des Grundkörpers und der Beschichtung hervorgerufen werden, vermieden werden. Diese Beschichtung kann erfindungsgemäß beispielsweise aus Aluminiumoxid bestehen. Die Beschichtung kann auch eine andere keramische Schicht sein, Insbesondere Al₂O₃, eine Mischung aus Al₂O₃/TiO₂, z. B. im Verhältnis von etwa 60 %/40 %, eine Diamantschicht oder eine Schicht aus einem anderen geeigneten Werkstoff vergleichbarer Härte mit ähnlich hohen Reibwerten. Im Rahmen einer bevorzugten Weiterbildung der Erfindung hat sich eine Beschichtung aus einem Chromcarbid in Verbindung mit einer Nickellegierung als besonderes geeignet erwiesen. Als Chromcarbid kommt dabei insbesondere Cr₃C₂ In Betracht, welches insbesondere mit einer Nickel-Chromiegierung NiCr vorteilhaft kombiniert werden kann. Besonders geeignet ist dabei eine Beschichtung aus Cr₃C₂/NiCr in einem Verhältnis von zwischen etwa 60 %/40 % und etwa 80 %/20 %, vorzugsweise In einem Mischungsverhältnle von etwa 75 %/25 %.

Der Grundkörper für die Bremsscheibe besteht aus einem vergleichsweise kostengünstigen metallischen Werkstoff, beispielsweise Grauguss. Eine Graugussscheibe kostet nur einen Bruchteil dessen, was eine Bremsscheibe kosten würde, die vollständig aus dem Material bestehen würde, welches erfindungsgemäß nur für die Reibschicht verwendet wird, beispielsweise aus Aluminiumoxid. Gegenüber anderen Bremsscheiben mit einem Grundkörper aus Grauguss und metallischen oder organischen Bremsbelägen hat die erfindungsgemäß verwendete Materialkombination höhere Reibwerte. Weiterhin hat die erfindungsgemäße Bremsscheibe den Vorteil, dass die Reibpaarung auch bei Temperaturen bis weit oberhalb von beispielsweise 1000 °C reibwertstabil ist. Dagegen fällt bei herkömmlichen Graugussbremsscheiben mit organischen Bremsbelägen der Reibwert bei Temperaturen ab etwa 600 °C ab, In der Regel auf Reibwerte unter µ = 0,4. Bei Temperaturen von oberhalb 800 °C ist bei den herkömmlichen Graugussbremsscheiben in der Regel der Reibwert nur noch völlig unzureichend. Bei Bremsungen aus hoher Geschwindigkeit wird aber eine Bremsscheibe an der Oberfläche so stark erwärmt, dass Spitzentemperaturen oberhalb von 1000 °C auftreten. Durch diese hohe Oberflächentemperatur wird schon während der Bremsung ein Teil der Energie als Strahlung abgegeben. Erst durch Konvektion wird das Innere der Bremsscheibe erwärmt.

Verwendet man Aluminiumoxidscheiben, die dicker sind als herkömmliche Graugussscheiben, um die erforderliche Wärmekapazität bereit zu stellen und damit bei einem vorgegebenen Scheibendurchmesser eine höhere Bremsleistung zu erreichen, ist eine solche Bremsscheibe mit einem Grundkörper aus Aluminiumoxid aufgrund der hohen Materialkosten für eine Serienfertigung im Automobilbau weniger interessant.
Auch bei der Verwendung eines Grundkörpers beispielsweise aus Grauguss gemäß der vorliegenden Erfindung hat die Bremsschelbe eine hohe Haltbarkeit. Beispielsweise kann man mit einer Lebensdauer von bis zu etwa 100.000 km rechnen. Der aus Grauguss bestehende Grundkörper wird vor der Beschichtung entsprechend der aufzubringenden Schichtdicke abgedreht, so dass Bremssattel und Beläge weiterhin benutzt werden können. Die aufzubringende Beschichtung aus dem Material mit erhöhter Härte für die Reibschicht kann beispielsweise eine Schichtdicke zwischen etwa 0,1 mm und etwa 2 mm aufweisen. Wenn anschließend die Beschichtung aufgebracht wird, entspricht danach die gesamte Materialstärke wieder derjenigen des ursprünglichen Grundkörpers.

Eine so beschichtete Brernsscheibe, insbesondere aus Grauguss hat gegenüber einer herkömmlichen Graugussbremsscheibe eine höhere Bremslelstung. Das Reibwertniveau Ist höher und der Reibwertabfall mit der Temperatur ist geringer. Der Verschleiß der Bremsscheibe ist gering, vergleichbar mit einer wesentlich teureren ausschließlich aus Aluminiumoxid bestehenden Bremsscheibe. Die Temperaturbelastung des Materials des Grundkörpers ist geringer, da Spitzentemperaturen an der Oberfläche von der Beschichtung abgefangen werden. Die Schelbendicke des Grundkörpers ist geringer bei vergleichbarer Wärmespeicherkapazität. Außerdem kann bei der erfindungsgemäßen Lösung der Bremssattel wieder verwendet werden, so dass gegebenenfalls auch vorhandene Bremsscheiben entsprechend nachgerüstet werden können.

Die vorliegende Erfindung betrifft weiterhin ein Verfahren zur Herstellung einer Bremsscheibe umfassend einen Grundkörper aus einem metallischen Werkstoff, insbesondere Grauguss, welcher wenigstens einseitig eine durch Beschichten erhaltene Reibfläche aufweist mit den Merkmalen des Anspruchs 12.

Nach dem Verfahren gemäß der Erfindung wird zunächst der Grundkörper vorzugsweise etwa um die Schichtdicke der aufzubringenden Beschichtung, bzw. bis zu +/- 20 % mehr oder weniger, vorzugsweise +/- 10 %, bezogen auf die Schichtdicke der Beschichtung, abgetragen und danach die Beschichtung aufgebracht. Vorzugsweise wird der Grundkörper etwa um die Schichtdicke der aufzubringenden Beschichtung abgedreht.

Mögliche Verfahren zur Aufbringung der Beschichtung im Rahmen der vorliegenden Erfindung sind APS (Atmosphärisches Plasmaspritzen), HVOF (Hochgeschwindigkeitsflammspritzen) oder Flammschockspritzen.

Die in den Unteransprüchen 2 bis 11 genannten Merkmale betreffen bevorzugte Weiterbildungen der erfindungsgemäßen Bremsscheibe. Die Unteransprüche 13 bis 17 betreffen eine bevorzugte Weiterbildung des erfindungsgemäßen Verfahrens. Weitere Vorteile der Erfindung ergeben sich aus der nachfolgenden Detailbeschreibung.

Nachfolgend wird die vorliegende Erfindung anhand eines Ausfuhrungsbeispiels unter Bezugnahme auf die beiliegende Zeichnung näher beschrieben. Dabei zeigt:
- Fig. 1: einen Längsschnitt durch eine erfindungsgemäße Bremsscheibe für ein Fahrzeug;
- Fig. 2a: eine Ansicht einer beschichteten Bremsscheibe gemäß einer möglichen Variante der Erfindung;
- Fig. 2b: eine Ansicht einer beschichteten Bremsscheibe gemäß einer weiteren möglichen Variante der Erfindung;
- Fig. 3: eine schematisch vereinfachte Ansicht zur Erläuterung eines möglichen Verfahrens zur Aufbringung der Beschichtung durch Aufspritzen.

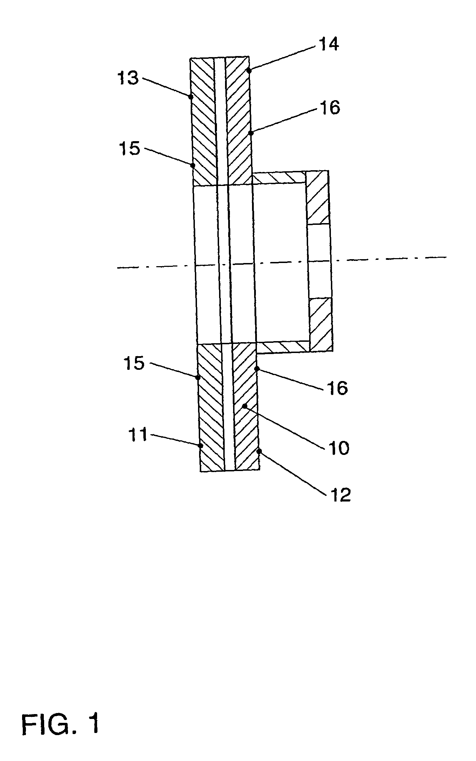

Die erfindungsgemäße Bremsscheibe gemäß Fig. 1 besteht aus einem Grundkörper 10, der beispielsweise aus Grauguss oder einem vergleichbaren metallischen Werkstoff besteht. Der Grundkörper 10 wird vorzugsweise an beiden Seiten um eine vorgegebene Materialstärke abgedreht in Richtung achsparallel zur Achse der Bremsscheibe. In diesen abgedrehten Bereichen 11, 12, 13, 14 des Grundkörpers, die dann eine geringere Materialstärke aufweisen, wird dann eine Beschichtung aus einem Material mit hohen Reibwerten als Reibschicht aufgebracht. Diese Beschichtung 15, 16 kann beispielsweise aus Al₂O₃, Diamant, einem keramischen Material oder einem Werkstoff vergleichbarer Härte mit ähnlichen Reibwerten bestehen. Die Schichtdicke der Reibschicht 15, 16 kann zwischen etwa 0,1 mm und etwa 2 mm liegen.

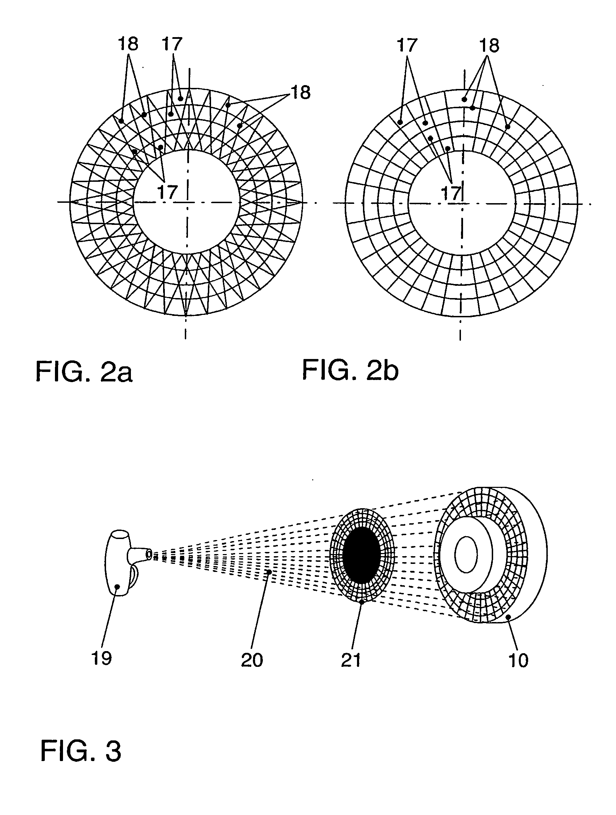

Durch unterschiedliche Ausdehnungskoeffizienten von Grauguss und dem Beschichtungsmaterial kann es bei Erwärmung der Bremsscheibe zu durch thermische Spannungen induzierten Rissen kommen. Diese lassen sich vermeiden durch Aussparen der Beschichtung z. B. etwa in einem Schachbrettmuster (siehe Fig. 2a oder 2b). Der Gitterabstand wird bestimmt durch die Rissbreite einer vollständig beschichteten Bremsschelbe (5 bis 40 mm Je nach Oberflächenbeschichtung). Die Furchen können entweder durch mechanische Bearbeitung oder durch eine Schablone beim Spritzen eingebracht werden.

Die Figuren 2a und 2b zeigen mögliche Varianten von Bremsscheiben mit aufgebrachter Beschichtung, jeweils In Achsrichtung der Bremsscheibe gesehen. Wie man erkennt, wechsein sich jeweils Bereiche 17 mit Beschichtung durch die Reibschicht ab mit unbeschlchteten Bereichen 18, um wie bereits erwähnt, die Entstehung von Rissen durch thermische Spannungen zu vermeiden. In dem Ausführungsbeispiel gemäß Figur 2a sind die beschichteten Bereiche 17 im Umriss annähernd dreieckig, wohingegen in dem Ausführungsbeispiel gemäß Figur 2b die beschichteten Bereiche 17 annähernd rechteckig sind, jeweils begrenzt durch Bogenlinlen an zwei Seiten, da es sich um Segmente von ringförmigen Scheiben handelt. Zwischen den beschichteten Bereichen liegen jeweils Rillen oder Furchen 18, die unbeschichtet sind.

Figur 3 zeigt beispielhaft in schematisch vereinfachter Form ein mögliches Verfahren zur Aufbringung der Beschichtung auf den Grundkörper 10 der Bremsscheibe. Dazu wird beispielsweise eine Spritzpistole 19 verwendet, die das Beschlchtungsmaterial 20 durch eine Gitterblende 21 hindurch auf die zu beschichtende Seite des Grundkörpers 10 der Bremsscheibe spritzt. Die Struktur der Gitterblende 21 entspricht dabei einer Form, wie sie zur Erzeugung eines Gittermusters mit beschichteten Feldern 17 z. B. gemäß der Darstellung von Figur 2b geeignet ist.

### BEZUGSZEICHENLISTE

- 10: Grundkörper
- 11, 12, 13, 14: abgedrehte Bereiche
- 15, 16: Reibschicht
- 17: beschichteter Bereich
- 18: unbeschichteter Bereich
- 19: Spritzpistole
- 20: Beschichtungsmaterial
- 21: Gitterblende

## Patentansprüche

1. Bremsscheibe für ein Fahrzeug umfassend einen Grundkörper (10) aus einem metallischen Werkstoff, insbesondere Grauguss, welcher wenigstens eine Reibfläche mit einer Beschichtung aus einem Material mit einem hohen Reibwert aufweist, wobei der Grundkörper (10) unter der Beschichtung eine abgetragene Materialstärke In Richtung achsparallel zur Achse der Bremsscheibe aufweist, **dadurch gekennzeichnet, dass** die Beschichtung des Grundkörpers (10) als Gitterstruktur mit beschichteten Bereichen (17) und unbeschichteten Bereichen (18) ausgebildet ist

2. Brernsscheibe nach Anspruch 1, **dadurch gekennzeichnet, dass** die abgetragene Materialstärke etwa der Schichtdicke der Beschichtung, entspricht oder bis zu 20 % größer oder kleiner, vorzugsweise bis zu 10 % größer oder kleiner, als die Schichtdicke der Beschichtung Ist.

3. Bremsscheibe für ein Fahrzeug nach Anspruch 1 oder 2, **dadurch gekennzeichnet, dass** der Grundkörper (10) unter der Beschichtung eine abgedrehte Materialstärke in Richtung achsparallel zur Achse der Bremsscheibe aufweist.

4. Bremsscheibe nach einem der Ansprüche 1 bis 3, **dadurch gekennzeichnet, dass** die Beschichtung aus Al₂O₃ oder Al₂O₃/TiO₂ besteht

5. Bremsscheibe nach einem der Ansprüche 1 bis 4, **dadurch gekennzeichnet, dass** die Beschichtung aus einer Mischung Al₂O₃/TiO₂ etwa in einem Verhältnis von zwischen 50 %/50 % und 70 %/30 %, insbesondere in einem Verhältnis von etwa 60 %/40 % besteht.

6. Bremsscheibe nach einem der Ansprüche 1 bis 5, **dadurch gekennzeichnet, dass** die Beschichtung ein Chromcarbid, Insbesondere Cr₃C₂ enthält.

7. Bremsscheibe nach Anspruch 6, **dadurch gekennzeichnet, dass** die Beschichtung ein Chromcarbid, Insbesondere Cr₃C₂ in Verbindung mit einer Nickellegierung enthält.

8. Bremsscheibe nach einem der Ansprüche 6 oder 7, **dadurch gekennzeichnet, dass** die Beschichtung aus einer Mischung aus einem Chromcarbid In Verbindung mit einer Nickel-Chromiegierung besteht.

9. Bremsscheibe nach einem der Ansprüche 1 bis 8, **dadurch gekennzeichnet, dass** die Beschichtung aus CrₐC₂/NiCr in einem Verhältnis von zwischen etwa 60 %/40 % und etwa 80 %/20 %, insbesondere in einem Verhältnis von etwa 75 %/25 % besteht.

10. Bremsscheibe nach einem der Ansprüche 1 bis 9, **dadurch gekennzeichnet, dass** die Beschichtung aus Diamant, einem keramischen Material oder einem Werkstoff mit einem ähnlich hohen Reibwert besteht.

11. Bremsscheibe nach einem der Ansprüche 1 bis 10, **dadurch gekennzeichnet, dass** die Beschichtung eine Schichtdicke von etwa 0,1 mm bis etwa 2 mm aufweist.

12. Verfahren zur Herstellung einer Bremsscheibe umfassend einen Grundkörper (10) aus einem metallischen Werkstoff, insbesondere Grauguss, welcher wenigstens einseitig eine durch Beschichten mit einem Werkstoff mit einem hohen Relbwert erhaltene Reibfläche aufweist, wobei zunächst der Grundkörper (10) im Bereich der aufzubringenden Beschichtung abgetragen und danach die Beschichtung aufgebracht wird, **dadurch gekennzeichnet, dass** durch mechanische Bearbeitung oder mit einem Schutzgitter beim Spritzen eine Gitterstruktur mit teilweise fehlender Beschichtung erzeugt wird.

13. Verfahren zur Herstellung einer Bremsscheibe nach Anspruch 12, **dadurch gekennzeichnet, dass** der Grundkörper (10) um eine Materialstärke, die etwa der Schichtdicke der aufzubringenden Beschichtung, entspricht oder bis zu 20 % größer oder kleiner, vorzugsweise bis zu 10% größer oder kleiner, als die Schichtdicke der BeschichtungIst, abgetragen wird, bevor die Beschichtung aufgebracht wird.

14. Verfahren zur Herstellung einer Bremsscheibe nach Anspruch 12 oder 13, **dadurch gekennzeichnet, dass** der Grundkörper (10) vor Aufbringung der Beschichtung um die entsprechende Materialstärke abgedreht wird.

15. Verfahren zur Herstellung einer Bremsscheibe nach einem der Ansprüche 12 bis 14, **dadurch gekennzeichnet, dass** die Beschichtung aufgebracht wird durch Atmosphärisches Plasmaspritzen, Hochgeschwindigkeitsflammspritzen oder Flammschockspritzen.

16. Verfahren zur Herstellung einer Bremsscheibe nach einem der Ansprüche 12 bis 15, **dadurch gekennzeichnet, dass** eine oxydische Beschichtung aufgebracht wird.

17. Verfahren zur Herstellung einer Bremsscheibe nach einem der Ansprüche 12 bis 16. **dadurch gekennzeichnet, dass** eine Beschichtung gemäß einem der Ansprüche 2 bis 7 aufgebracht wird.

## Claims

1. Brake disc for a vehicle, comprising a main body (10) which is made of a metallic material, in particular grey cast iron, and has at least one friction surface having a coating made of a material with a high coefficient of friction, wherein the main body (10) has a removed material thickness under the coating in a direction which is axially parallel to the axis of the brake disc, **characterized in that** the coating of the main body (10) is in the form of a grid structure with coated regions (17) and uncoated regions (18).

2. Brake disc according to Claim 1, **characterized in that** the removed material thickness corresponds approximately to the layer thickness of the coating or is up to 20% greater or smaller, preferably up to 10% greater or smaller, than the layer thickness of the coating.

3. Brake disc for a vehicle according to Claim 1 or 2, **characterized in that** the main body (10) has a turned-down material thickness under the coating in a direction which is axially parallel to the axis of the brake disc.

4. Brake disc according to one of Claims 1 to 3, **characterized in that** the coating consists of Al₂O₃ or Al₂O₃/TiO₂.

5. Brake disc according to one of Claims 1 to 4, **characterized in that** the coating consists of an Al₂O₃/TiO₂ mixture approximately in a ratio of between 50%/50% and 70%/30%, in particular in a ratio of approximately 60%/40%.

6. Brake disc according to one of Claims 1 to 5, **characterized in that** the coating comprises a chromium carbide, in particular Cr₃C₂.

7. Brake disc according to Claim 6, **characterized in that** the coating comprises a chromium carbide, in particular Cr₃C₂, in combination with a nickel alloy.

8. Brake disc according to either of Claims 6 and 7, **characterized in that** the coating consists of a mixture of a chromium carbide in combination with a nickel-chromium alloy.

9. Brake disc according to one of Claims 1 to 8, **characterized in that** the coating consists of Cr₃C₂/NiCr in a ratio of between approximately 60%/40% and approximately 80%/20%, in particular in a ratio of approximately 75%/25%.

10. Brake disc according to one of Claims 1 to 9, **characterized in that** the coating consists of diamond, a ceramic material or a material having a similarly high coefficient of friction.

11. Brake disc according to one of Claims 1 to 10, **characterized in that** the coating has a layer thickness of approximately 0.1 mm to approximately 2 mm.

12. Method for producing a brake disc comprising a main body (10) which is made of a metallic material, in particular grey cast iron, and at least on one side has a friction surface obtained by coating with a material with a high coefficient of friction, wherein firstly material is removed from the main body (10) in the region of the coating to be applied, and then the coating is applied, **characterized in that** a grid structure having a partially absent coating is produced by machining or using a protective grid during spraying.

13. Method for producing a brake disc according to Claim 12, **characterized in that** material is removed from the main body (10) in a material thickness which corresponds approximately to the layer thickness of the coating to be applied or is up to 20% greater or smaller, preferably up to 10% greater or smaller, than the layer thickness of the coating, before the coating is applied.

14. Method for producing a brake disc according to Claim 12 or 13, **characterized in that** the main body (10) is turned down by the corresponding material thickness before the coating is applied.

15. Method for producing a brake disc according to one of Claims 12 to 14, **characterized in that** the coating is applied by atmospheric plasma spraying, high-velocity flame spraying or detonation spraying.

16. Method for producing a brake disc according to one of Claims 12 to 15, **characterized in that** an oxidic coating is applied.

17. Method for producing a brake disc according to one of Claims 12 to 16, **characterized in that** a coating according to one of Claims 2 to 7 is applied.

## Revendications

1. Disque de frein pour véhicule, comprenant un corps de base (10) en un matériau métallique, en particulier en fonte brute, qui présente au moins une surface de frottement dotée d'un revêtement en un matériau à haut coefficient de frottement,
le corps de base (10) présentant en dessous du revêtement une épaisseur de matière enlevée dans une direction parallèle à l'axe du disque de frein, **caractérisé en ce que**
le revêtement du corps de base (10) est configuré comme structure en grille qui présente des parties revêtues (17) et des parties non revêtues (18).

2. Disque de frein selon la revendication 1, **caractérisé en ce que** l'épaisseur de matière enlevée correspond sensiblement à l'épaisseur de la couche de revêtement ou est de jusque 20 % plus grande ou plus petite et de préférence de jusque 10 % plus grande ou plus petite que l'épaisseur de la couche de revêtement.

3. Disque de frein pour véhicule selon les revendications 1 ou 2, **caractérisé en ce que** le corps de base (10) présente en dessous du revêtement une épaisseur de matière enlevée par usinage au tour dans une direction parallèle à l'axe du disque de frein.

4. Disque de frein selon l'une des revendications 1 à 3, **caractérisé en ce que** le revêtement est constitué d'Al₂O₃ ou d'Al₂O₃/TiO₂.

5. Disque de frein selon l'une des revendications 1 à 4, **caractérisé en ce que** le revêtement est constitué d'un mélange d'Al₂O₃ et de TiO₂ dans un rapport approximatif compris entre 50 % à 50 % et 70 % à 30 % et en particulier dans un rapport approximatif de 60 % à 40 %.

6. Disque de frein selon l'une des revendications 1 à 5, **caractérisé en ce que** le revêtement contient un carbure de chrome et en particulier du Cr₃C₂.

7. Disque de frein selon la revendication 6, **caractérisé en ce que** le revêtement contient un carbure de chrome, en particulier Cr₃C₂, associé à un alliage de nickel.

8. Disque de frein selon l'une des revendications 6 ou 7, **caractérisé en ce que** le revêtement est constitué d'un mélange de carbure de chrome associé à un alliage de nickel et de chrome.

9. Disque de frein selon l'une des revendications 1 à 8, **caractérisé en ce que** le revêtement est constitué de Cr₃C₂/NiCr dans un rapport compris entre environ 60 % à 40 % et environ 80 % à 20% et en particulier dans un rapport d'environ 75 % à 25 %.

10. Disque de frein selon l'une des revendications 1 à 9, **caractérisé en ce que** le revêtement est constitué de diamant, d'un matériau céramique ou d'un matériau présentant un coefficient de frottement d'un niveau similaire.

11. Disque de frein selon l'une des revendications 1 à 10, **caractérisé en ce que** la couche de revêtement a une épaisseur comprise entre environ 0,1 mm et environ 2 mm.

12. Procédé de fabrication d'un disque de frein comprenant un corps de base (10) en matériau métallique, en particulier en fonte brute, dont au moins une face présente une surface de frottement obtenue par revêtement par un matériau à haut coefficient de frottement, de la matière étant d'abord enlevée du corps de base (10) au niveau du revêtement à appliquer et le revêtement étant ensuite appliqué, **caractérisé en ce que**
une structure en grille dans laquelle le revêtement est partiellement absent est formée par usinage mécanique ou par pulvérisation à travers une grille de protection.

13. Procédé de fabrication d'un disque de frein selon la revendication 12, **caractérisé en ce qu'**une épaisseur de matière qui correspond sensiblement à l'épaisseur de la couche de revêtement à appliquer ou qui est de jusque 20 % plus grande ou plus petite et de préférence de jusque 10 % plus grande ou plus petite que l'épaisseur de la couche de revêtement est enlevée du corps de base (10) avant d'appliquer le revêtement.

14. Procédé de fabrication d'un disque de frein selon les revendications 12 ou 13, **caractérisé en ce que** l'épaisseur de matière appropriée est enlevée du corps de base (10) par usinage au tour avant d'appliquer le revêtement.

15. Procédé de fabrication d'un disque de frein selon l'une des revendications 12 à 14, **caractérisé en ce que** le revêtement est appliqué par projection au plasma atmosphérique, projection à la flamme à haute vitesse ou projection choc à la flamme.

16. Procédé de fabrication d'un disque de frein selon l'une des revendications 12 à 15, **caractérisé en ce que** le revêtement appliqué est oxydé.

17. Procédé de fabrication d'un disque de frein selon l'une des revendications 12 à 16, **caractérisé en ce qu'**il applique un revêtement selon l'une des revendications 2 à 7.
